Europäisches Patentamt

European Patent Office

Office européen des brevets

(11) Veröffentlichungsnummer: **0 264 696**
**A2**

## (12) EUROPÄISCHE PATENTANMELDUNG

(21) Anmeldenummer: 87114457.2

(22) Anmeldetag: 03.10.87

(51) Int. Cl.⁴: **B01D 13/01** , A61M 1/18

(30) Priorität: 13.10.86 DE 3634872

(43) Veröffentlichungstag der Anmeldung:
**27.04.88 Patentblatt 88/17**

(84) Benannte Vertragsstaaten:
**AT BE CH DE ES FR GB GR IT LI LU NL SE**

(71) Anmelder: **Akzo N.V.**
**Postbus 186 Velperweg 76**
**NL-6800 LS Arnhem(NL)**

(72) Erfinder: **Baurmeister, Ulrich, Dr.**
**Moltkestrasse 67**
**D-5600 Wuppertal 1(DE)**
Erfinder: **Wollbeck, Rudi**
**Am Stadtwald 24**
**D-8765 Erlenbach(DE)**

(74) Vertreter: **Fett, Günter**
**Akzo GmbH Kasinostrasse 19-23**
**D-5600 Wuppertal 1(DE)**

(54) Vorrichtung zum Stoffaustausch.

(57) Vorrichtung zum Stoffaustausch mittels Hohlfäden, deren Endbereiche in je einem mit einem Gehäusemantel fluiddicht verbundenen Vergußmasseblock eingegossen sind, bei welcher der Gehäusemantel wenigstens eine Öffnung aufweist, im Bereich ihrer Längsachse ein Verteilerkörper für das Zu-oder Abführen des die Hohlfäden umströmenden Fluids angeordnet ist, die Hohlfäden mikroporös sind und über den gesamten Querschnitt der Vergußmasseblöcke gleichmäßig verteilt angeordnet sind und zwischen den äußeren Hohlfäden und dem Gehäusemantel ein ringförmiger freier Raum vorhanden ist, in den die wenigstens eine Öffnung mindet. Der Gehäusemantel und der Verteilerkörper sowie die ggf. angeordneten Endkappen sind vorzugsweise so gestaltet, daß sie im Spritzgußverfahren hergestellt werden können. Die Vorrichtung eignet sich insbesondere als Blutoxygenator, wobei sie über einen Zwischenring mit einem Wärmeaustauscher zum Temperieren des Blutes zu einer Einheit zusammengesetzt sein kann.Die Vorrichtung ist auch ganz allgemein zur Be-und/oder Entgasung von Flüssigkeiten, zur Transmembrandestillation, als Filter, als Ölabscheider, als Blutplasmaseparator oder als Hämokonzentrator geeignet.

Fig.1

## Vorrichtung zum Stoffaustausch

Die Erfindung betrifft eine Vorrichtung zum Stoffaustausch zwischen zwei fluiden Stoffen durch die Wand von durchgehend offenen Hohlfäden, deren Endbereiche in je einem Vergußmasseblock eingegossen sind, bei welcher die beiden Vergußmasseblöcke fluiddicht mit einem die Hohlfäden umgebenden Gehäusemantel verbunden sind, der Gehäusemantel wenigstens eine Öffnung für das Zu-oder Abführen eines der beiden fluiden Stoffe aufweist und im Bereich ihrer Längsachse ein über die gesamte Länge der Hohlfäden sich erstreckender Verteilerkörper für das über die gesamte freie Länge derselben gleichmäßige Zu-oder Abführen des anderen der beiden fluiden Stoffe angeordnet ist.

Eine solche Vorrichtung ist aus verschiedenen Druckschriften bekannt, jedoch stets nur als eine auf einen bestimmten Verwendungszweck zugeschnittene und dafür bemessene und mit dementsprechend ausgebildeten, die Verteiler-und Sammelräume für den die Hohlfäden durchströmenden fluiden Stoff bildenden Endkappen versehene Einrichtung.

Die unterschiedlichen zu lösenden Aufgaben in technischen und medizinischen Bereichen führten somit zu einer fast unüberschaubaren Vielzahl von - Spezialtypen, die häufig nur für einen einzigen Einsatzzweck zu gebrauchen sind. Der ständig steigende Bedarf an Vorrichtungen der hier vorliegenden Art für bereits bekannte Einsatzgebiete sowie die immer noch wachsende Anzahl neuer Einsatzmöglichkeiten erfordern eine rationellere Herstellung der hierfür geeigneten Einrichtungen.

Der vorliegenden Erfindung liegt daher im wesentlichen die Aufgabe zu Grunde, die zuvor genannte Forderung nach einer rationelleren Herstellung gattungsgemäßer Vorrichtungen zu erfüllen.

Die Erfindung besteht darin, ein auf einer Grundeinheit aufbauendes Baukastensystem zur Verfügung zu stellen und die Teile dieses Systems so auszubilden, daß sich daraus möglichst viele Spezialtypen und Ausführungsformen aufbauen lassen, darüber hinaus aber auch die Forderung nach einem möglichst sparsamen Werkstoffverbrauch erfüllt wird, insbesondere dann, wenn diese Vorrichtungen nach einmaligem Gebrauch verworfen werden müssen, so wie es bei der Anwendung im medizinischen Bereich häufig der Fall ist, und daß sich die Herstellung der Teile des Systems durch einen geringen Energiebedarf auszeichnet, nicht zu lohnintensiv ist und wenigstens teilweise automatisch durchführbar ist.

Die erfindungsgemäße Grundeinheit besteht in einer Vorrichtung der einleitend genannten Art, die durch - die kennzeichnenden Merkmale des Anspruchs 1 charakterisiert ist. Sie stellt einen modulartigen Grundbaustein dar, aus dem sich viele Ausgestaltungsformen aufbauen lassen, von denen die besonders bevorzugten, in den Unteransprüchen beschriebenen und beispielshalber anhand der Figuren und der Figurenbeschreibung veranschaulicht werden.

Unter fluidem Stoff wird im Rahmen der vorliegenden Erfindung eine Flüssigkeit, ein Flüssigkeitsgemisch, ein Dampf, ein Dampfgemisch, ein Gas, ein Gasgemisch oder ein Gemisch aus diesen Stoffen verstanden; darunter fallen beispielsweise auch Lösungen und Flüssigkeiten mit lebenden Organismen, wie beispielswiese Blut, gärende Getränke usw.

Vorzugsweise sind möglichst viele Teile des Systems so ausgebildet, daß ihre Herstellung im Spritzgußverfahren möglich ist.

Die mikroporösen Hohlfäden gestatten gegenüber nichtporösen einen verbesserten Stoffaustausch. Die gleichmäßige Verteilung der Hohlfäden in den Vergußmasseblöcken bis in den zum Gehäusemantel hin sich erstreckenden Randbereich führt zu einer nicht unerheblichen Einsparung von Vergußmasse, bei der es sich häufig um Polyurethan handelt.

Eine weitere Materialeinsparung, insbesondere von Hohlfäden, wird u.a. dadurch erzielt, daß die Hohlfäden auf ihrem gesamten freien, also nichteingegossenen, Abschnitt äußerst gleichmäßig quer, also im wesentlichen senkrecht zu ihrer Längsachse, anströmbar (umströmbar) sind, da dies nämlich auf Grund der in den Hohlfäden herrschenden laminaren Strömungsverhältnisse zu deutlich höheren spezifischen Stoffaustauschraten führt. Um dies zu bewirken, weist die erfindungsgemäße Vorrichtung zwischen den äußeren Hohlfäden und dem Gehäusemantel wenigstens einen freien Raum mit ringförmigem Querschnitt auf, der so bemessen ist, daß sein Strömungswiderstand von oder zu der Eintritts-bzw. Austrittsöffnung für den die Hohlfäden umströmenden fluiden Stoff wesentlich geringer ist als der Strömungswiderstand beim Umströmen der Hohlfäden in deren Längsrichtung sonst wäre. Dies wird dadurch erreicht, daß der Abstand der äußeren Hohlfäden vom Gehäusemantel deutlich größer ist als der gegenseitige Hohlfadenabstand. Bei Verwendung der Vorrichtung als Blutoxygenator führt diese äußerst gleichmäßige Umströmung der Hohlfäden zu einer merklichen Verbesserung der Kohlendioxidaustragung aus dem Blut.

Der freie Raum zwischen dem Gehäusemantel und den äußeren Hohlfäden dient je nach Strömungsrichtung des die Hohlfäden umströmenden fluiden Stoffes als Sammelraum oder als Verteilerraum für diesen.

Hydrophobe Hohlfäden sind dann von Vorteil, wenn verhindert werden soll, daß wäßrige Lösungen, beispielsweise auch Blut, in und durch die Poren treten, während gas-oder dampfförmige fluide Stoffe dies tun sollen. Ein Durchtritt auch von wäßrigen Lösungen durch die Poren mikroporöser hydrophober Hohlfäden kann aber durch Anwendung eines ausreichend hohen Transmembrandruckes bewirkt werden.

Vorzugsweise bestehen die Hohlfäden aus einem vollsynthetischen Polymeren, insbesondere aus Polypropylen oder Polyäthylen, die beide von Natur aus hydrophob sind.

Für die Anordnung der Hohlfäden haben sich im wesentlichen zwei Ausführungsformen als besonders vorteilhaft erwiesen, nämlich zum einen eine Anordnung, bei der die Hohlfäden im wesentlichen geradlinig und parallel zueinander angeordnet sind, und zum anderen eine solche, bei der die Hohlfäden ähnlich wie in einer Kreuzspule angeordnet sind, bei welcher die Hohlfäden also - schraubenlinienförmig ausgebildet und in mehreren Lagen übereinander angeordnet sind, wobei die Hohlfäden benachbarter Lagen einen gegenläufigen Drehsinn aufweisen und sich somit kreuzen und nur an den Kreuzungspunkten berühren. Bei dieser Anordnung können die Hohlfäden ebenfalls die gleiche oder aber eine unterschiedliche Länge aufweisen.

Zur Herstellung eines Hohlfadenbündels beispielsweise aus einer Kreuzspule kann zu diesem Zweck der Spulenaufbau der Kreuzspule als sogenannte "wilde Kreuzwicklung" (gleiche Fadenlänge in jeder Lage) oder als sogenannte "Präzisions-Kreuzwicklung" (größere Fadenlänge in den äußeren Lagen als in den inneren Lagen) ausgebildet werden (vgl. DIN 61 801, Seite 4, Nr. 20.1.1 und 20.1.2). Jedoch ist auch die Herstellung einer solchen Anordnung durch entsprechendes Aufwickeln eines Hohlfadengewebes möglich, bei dem sowohl die Kettfäden als auch die Schußfäden aus Hohlfäden bestehen.

Zur Herstellung eines Hohlfadenbündels aus im wesentlichen geradlinig und parallel zueinander angeordneten Hohlfäden wird vorzugsweise von einer Hohlfadenmatte ausgegangen; hierbei handelt es sich um eine Hohlfadenanordnung, bei welcher parallel zueinander und in (gleichen) Abständen voneinander angeordnete Hohlfäden beispielsweise durch quer zu ihren Längsachsen verlaufende Klebestreifen oder durch mittels eines Web-oder Wirkverfahrens eingebrachte (textile) Fäden in der zuvor beschriebenen Anordnung festgehalten werden.

Verfahren zum Herstellen von Hohlfadenmatten wie auch die Hohlfadenmatten selbst sind an sich bekannt. Durch Aufrollen einer solchen Matte erhält man ein Hohlfadenbündel aus im wesentlichen geradlinig und parallel zueinander angeordneten Hohlfäden, wobei die Hohlfäden auch im Bündel in definierten Abständen voneinander gehalten werden, so daß eine gleichmäßige radiale Durchströmung des Hohlfadenbündels erreicht werden kann.

Die Herstellung des Gehäusemantels geschieht vorzugsweise im Spritzgußverfahren. Nach diesem Verfahren lassen sich jedoch nicht alle Formen herstellen. Gehäusemantelformen, die in besonders vorteilhafter Weise nach einem Spritzgußverfahren herstellbar sind und zudem zu einer vorteilhaften Ausgestaltung der erfindungsgemäßen Vorrichtung führen, sind auch in der Zeichnung dargestellt und weiter unten beschrieben.

Der im Bereich der Längsachse der erfindungsgemäßen Vorrichtung angeordnete Verteilerkörper für den die Hohlfäden umströmenden fluiden Stoff kann ein mit Wanddurchbrüchen beliebiger Form, Größe und Anzahl versehenes, also perforiertes, Rohr sein. Eine noch gleichmäßigere Verteilung des die Hohlfäden umströmenden fluiden Stoffes wird jedoch mit einem rohrförmigen Körper erreicht, dessen Wand aus einem mikroporösen fluiddurchlässigen Werkstoff besteht. Vorzugsweise· wird jedoch ein Verteilerkörper eingesetzt, der sich ebenfalls nach einem Spritzgußverfahren herstellen läßt, der stab-oder rohrförmig, also zylinderförmig, ausgebildet ist und der auf seiner Außenseite einen spiralförmig verlaufenden, über seine gesamte Länge, zumindest aber iber den nicht eingegossenen Bereich, sich erstreckenden Kanal aufweist. Dieser kann, um eine noch gleichmäßigere Verteilung des die Hohlfäden umströmenden fluiden Stoffes zu gewährleisten, mit einer mikroporösen fluiddurchlässigen Membran abgedeckt sein.

Schließlich kann der Verteilerkörper für den die Hohlfäden umströmenden fluiden Stoff auch ein Bündel aus Hohlfäden mit einer mikroporösen fluiddurchlässigen Wand sein.

Überraschend wurde gefunden, daß für das gleichmäßige Beaufschlagen aller Hohlfäden mit dem die Hohlfäden durchströmenden fluiden Stoff vorzugsweise andere Strömungsverhältnisse eingestellt werden als für das gleichmäßige Abführen des aus den Hohlfäden austretenden fluiden Stoffes. Dies gilt insbesondere dann, wenn es sich bei dem die Hohlfäden durchströmenden fluiden Stoff um Blut handelt. Dabei stellt das gleichmäßige Verteilen auf der Zuführseite offenbar ein größeres Problem dar als das gleichmäßige Abführen. Für das gleichmäßige Verteilen des die Hohlfäden durchströmenden Fluids auf alle Hohlfäden hat sich eine Verteilerkappe mit einem tangential im äußeren Umfangsbereich der Kappe mündenden Anschlußstutzen und einem im Bereich ihrer Längsachse angeordneten Anschlußstutzen für den die Hohlfäden umströmenden fluiden stoff, wobei der Anschlußstutzen über ein rohrförmiges Verbindungsstück an den Verteilerkörper angeschlossen ist, als besonders vorteilhaft erwiesen. Eine solche Kappe bildet also, wenn sie an einem Ende der Vorrichtung aufgesetzt wird, den Verteilerraum für den die Hohlfäden durchströmenden fluiden Stoff.

Auf der gegenüberliegenden Seite der Vorrichtung, auf welcher der aus den Hohlfäden austretende fluide Stoff gesammelt und weggeführt wird, ist vorzugsweise eine diffusorähnlich ausgebildete Kappe angeordnet, die nur den im Bereich ihrer Längsachse angeordneten, in Längsrichtung mündenden Anschlußstutzen für das Abführen des aus den Hohlfäden ausgetretenen fluiden Stoffes aufweist.

Das Zu-bzw. Abführen des die Hohlfäden umströmenden fluiden Stoffes kann jedoch auch über einen Anschlußstutzen und wenigstens eine mit diesem und dem Verteilerkörper verbundene Zuleitung erfolgen, die von einem Zwischenring gehalten werden, der zwischen dem Gehäusemantel und einer der beiden Kappen angeordnet ist. In diesem Fall können auch bei der oben beschriebenen Verteilerkappe mit tangential mündendem Anschlußstutzen für den die Hohlfäden durchströmenden fluiden Stoff der Anschlußstutzen und die Verbindungsleitung zum Verteilerkörper für den die Hohlfäden umströmenden fluiden Stoff entfallen.

Diese Ausgestaltung führt zu einer verhältnismäßig flachen Kappe und hat unter anderem den großen Vorteil, daß die erfindungsgemäße Vorrichtung mit der flachen Kappe nach unten auf jede beliebige, im wesentlichen waagerechte ebene Fläche gestellt werden kann, ohne umzufallen. Dies vereinfacht ihren Gebrauch wesentlich, da es irgendwelcher Einrichtungen zum Befestigen oder Aufhängen der Vorrichtung hierbei nicht bedarf. Bei dieser Anordnung und Art des Gebrauches besteht zudem der Vorteil, daß eine Befüllung der Vorrichtung von unten nach oben erfolgt und damit ein gleichmäßiges Verdrängen des in dem Verteilerraum, den Hohlfäden und dem Sammelraum enthaltenden Gases (Entlüften) stattfindet.

Die erfindungsgemäße Vorrichtung nach Anspruch 1 stellt eine Grundeinheit dar, wobei ihre Länge beliebig sein kann. Auf diese Weise ist es möglich, aus einer begrenzten Anzahl von Grundeinheiten unterschiedlicher Länge Stoffaustauscher aufzubauen, deren Länge praktisch beliebig bemessen werden kann, indem Grundeinheiten gleicher oder unterschiedlicher Länge zu einem Stoffaustauscher mit der gewünschten Länge zusammengesetzt werden. Dies wird erfindungsgemäß dadurch erreicht, daß die Grundeinheiten stirnseitig in einem Abstand voneinander durch je einen den Gehäusemantel zweier benachbarter Einheiten miteinander verbindenden äußeren Zwischenring und je einen die Verteilerkörper zweier benachbarter Einheiten miteinander verbindenden inneren Zwischenring miteinander verbunden werden. Jeder dabei zwischen dem inneren und dem äußeren Zwischenring und den beiden einander zugewandten Stirnseiten der Einheiten gebildete Zwischenraum dient als Sammel-bzw. Verteilerraum für den die Hohlfäden durchströmenden fluiden Stoff. Durch wenigstens einen dieser Räume und die beiden dazugehörenden Zwischenringe kann eine Rohrleitung für das Zu-bzw. Abführen des die Hohlfäden umströmenden fluiden Stoffes zu den Verteilerkörpern geführt werden.

Die erfindungsgemäße Vorrichtung eignet sich insbesondere als Begasungs-und Entgasungseinrichtung, also insbesondere als Blutoxygenator, als Transmembrandestillationseinrichtung, als Filter, als Ölabscheider oder als Blutplasmaseparator. In besonders vorteilhafter Weise wird die erfindungsgemäße Vorrichtung in Reihe mit einem Wärmeaustauscher und/oder einem Hämokonzentrator und/oder einem arteriellen Filter zur Abtrennung von Gasblasen und/oder einem Blutplasmaseparator geschaltet, wobei in besonders vorteilhafter Weise die Blutströmungsquerschnitte aller genannten in Reihe geschalteten Einrichtungen gleich groß bemessen sind und Verengungen oder Erweiterungen der blutführenden Teile zwischen den genannten Einrichtungen nicht vorhanden sind. Auch bei einer solchen Reihenschaltung der erfindungsgemäßen Vorrichtung mit Einrichtungen der genannten Arten gilt, daß es vorteilhaft sein kann, für das Zuführen des die Hohlfäden durchströmenden fluiden Stoffes eine Kappe mit tangential mündendem Anschlußstutzen und für das Abführen des aus den Hohlfäden ausgetretenen fluiden Stoffes eine diffusorähnlich ausgebildete Kappe zu verwenden.

Bei Verwendung der Vorrichtung beispielsweise als Blutplasmaseparator, Filter oder Ölabscheider ist der durch die porösen Hohlfäden abgetrennte, d.h. der aus den Poren der Wand der Hohlfäden austretende, fluide Stoff je nach Strömungsrichtung entweder der die Hohlfäden durchströmende oder der die Hohlfäden umströmende Stoff. Hierbei bedarf es dann keiner gesonderten Zuführung desselben, da dieser bereits in dem zugeführten zu behandelnden fluiden Stoff enthalten ist.

Wird die erfindungsgemäße Vorrichtung zur Behandlung von Blut verwendet, so kann das Blut auch der die Hohlfäden umströmende fluide Stoff sein. Bei der Verwendung als Blutplasmaseparator hat sich die Fahrweise, bei der das Blut die Hohlfäden außen umströmt bei einer Ausführungsform, bei welcher die Hohlfäden ähnlich wie in einer Kreuzspule angeordnet sind, sehr gut bewährt.

Für die verschiedenen Teile der erfindungsgemäßen Vorrichtung haben sich folgende Werkstoffe als besonders vorteilhaft erwiesen: Verteilerkappen: Polycarbonat
Gehäusemantel: Polycarbonat
Zwischenringe: Polycarbonat
Vom äußeren Zwischenring zum inneren Zwischenring führende Rohrleitung: Edelstahl
Vergußmasseblöcke: Polyurethan
Hohlfäden: Polypropylen
Verteilerkörper: Polycarbonat

Die übrigen Merkmale der Hohlfäden bzw. des Hohlfadenbündels liegen vorzugsweise in folgenden Bereichen: Porengröße: <0,3 μm
Porenvolumen: 75 % ( 60 - 85 % )
Innendurchmesser: 180 μm (150 - 250 μm)
Außendurchmesser: 260 μm (190 - 350 μm)
Gesamtlänge: 120 mm
Freie, das heißt nichteingegossene Länge: 95 mm
Füllgrad des Hohlfadenbündels: 53 % (40 - 60 %)
Anzahl der Hohlfäden: 65 500 (28 400 - 144 600)

Die Erfindung wird nachfolgend anhand der Zeichnung (Figuren 1 bis 15) näher erläutert. Für die Figuren wurde teilweise eine stark vereinfachte schematische Darstellungsweise gewählt. Die Figuren 6 und 13 zeigen die Gegenstände in Draufsicht, alle übrigen Figuren stellen den jeweiligen Gegenstand im (teilweisen) Längsschnitt dar. Gleiche Teile haben in allen Figuren die gleiche Positionszahl, so daß eine wiederholende Aufzählung bzw. Beschreibung wiederkehrender Teile weitestgehend entbehrlich erscheint. Die einzelnen Positionszahlen bezeichnen folgende Teile:

1 Hohlfäden
2 Vergußmasseblock
3 Vergußmasseblock
4 Gehäusemantel
5 Öffnung im Gehäusemantel 4
6 Verteilerkörper
7 freier Zwischenraum
8 Endbereich des Gehäusemantels 4
9 Innerer Umfang
10 Mitte des Gehäusemantels 4
11 Gehäusemantelende
12 Gehäusemantelende
13 Nahtstelle
14 Umlaufender Kanal
15 Innenraum
16 Durchbruch; Bohrung
17 Kappe mit tangential mündendem Anschlußstutzen
18 Tangential mündender Anschlußstutzen
19 Diffusorähnlich ausgebildete Kappe
20 In Längsrichtung mündender Anschlußstutzen
21 Anschlußstutzen
22 Rohrleitung
23 Umlenkkörper
24 Äußerer Zwischenring
25 Innerer Zwischenring
26 Verteiler-bzw. Sammelraum
27 Ab-bzw. Zuleitung
28 Verteiler-bzw. Sammelraum
29 Verteiler-bzw. Sammelraum
30 Einrichtung
31 Halterung

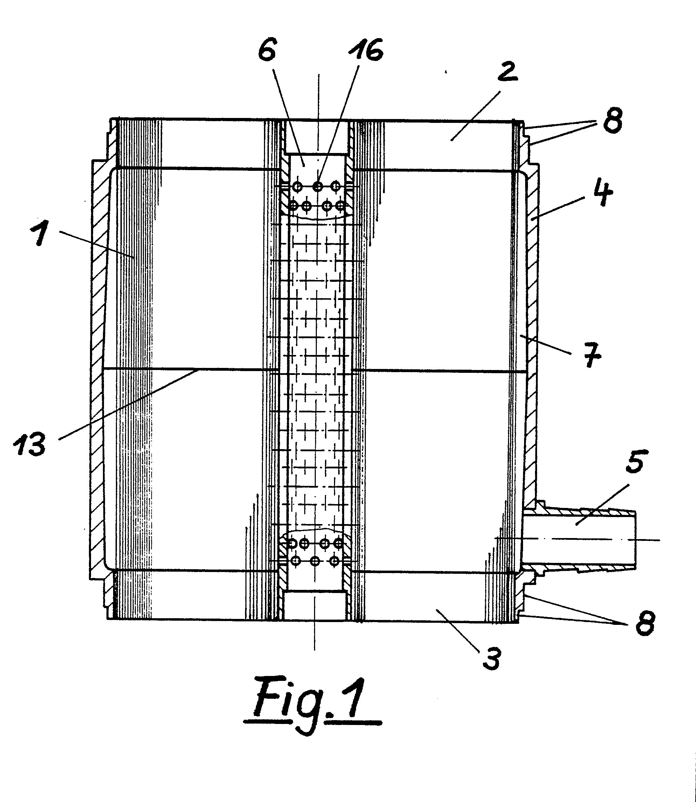

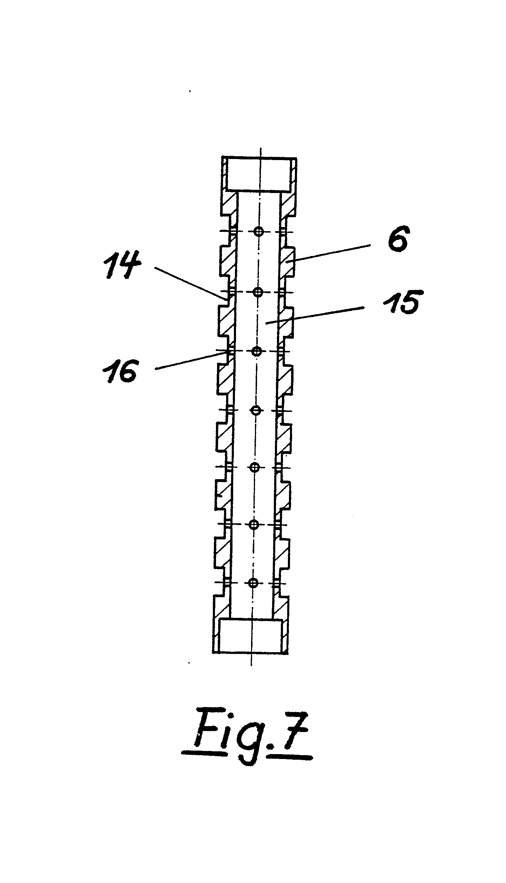

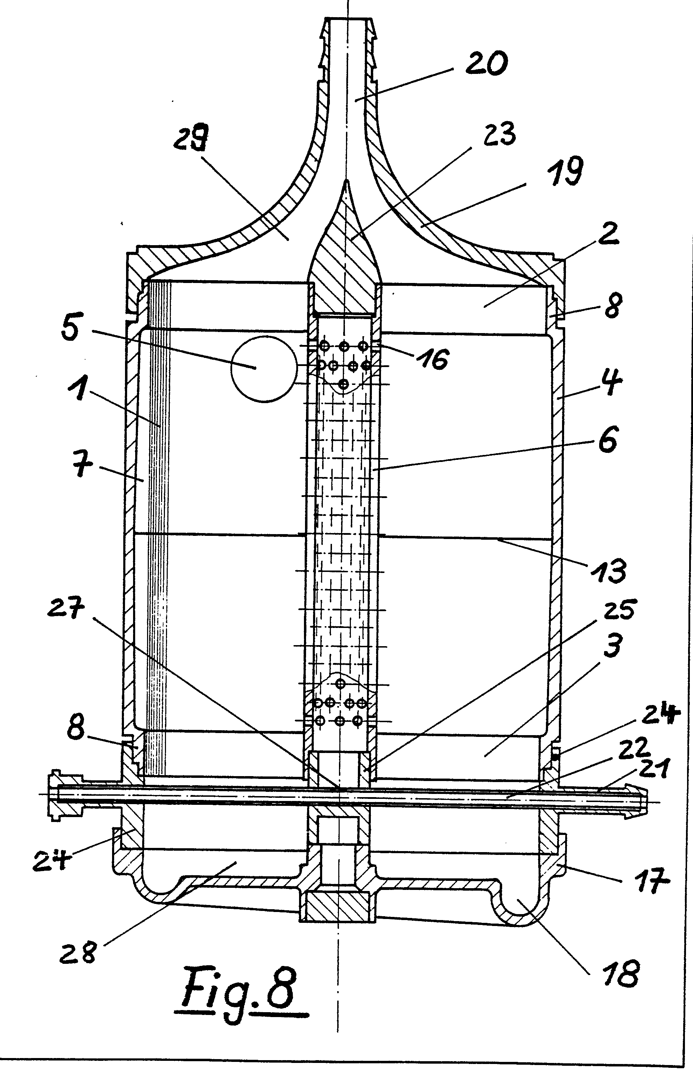

Figur 1 zeigt eine modulartige Grundeinheit, mit der sich nach dem Baukastenprinzip auf unterschiedliche Anforderungen zugeschnittene Systeme aufbauen lassen. Diese als Grundbaustein dienende Vorrichtung zum Stoffaustausch zwischen zwei fluiden Stoffen weist folgende Teile auf: Die durchgehend offenen Hohlfäden 1, die mikroporös sind und durchgehende nach außen offene Poren aufweisen, deren Endbereiche in je einen der beiden Vergußmasseblöcke 2 bzw. 3 eingegossen sind, wobei die beiden Vergußmasseblöcke 2; 3 fluiddicht mit dem Gehäusemantel 4 verbunden sind und der Gehäusemantel 4 wenigstens eine Öffnung 5 für das Zu-oder Abführen eines der beiden fluiden Stoffe aufweist sowie den im Bereich der Längsachse der Vorrichtung über die gesamte Länge der Hohlfäden sich erstreckenden Verteilerkörper 6 für das über die gesamte freie (d.h. nicht eingegossene) Länge der Hohlfäden 1 gleichmäßige Zu-oder Abführen des die Hohlfäden 1 umströmenden fluiden Stoffes. Die Hohlfäden 1 sind über den gesamten Querschnitt der Vergußmasseblöcke 2 bzw. 3 bis in den zum Gehäusemantel 4 hin sich erstreckenden Randbereich gleichmäßig verteilt angeordnet. Der Gehäusemantel 4 hat im Bereich des freien, also nicht eingegossenen Abschnitts der Hohlfäden 1 einen größeren Innendurchmesser als im Bereich der Vergußmasseblöcke 2 bzw. 3, so daß zwischen dem nicht eingegossenen Bereich der äußeren Hohlfäden 1 und dem Gehäusemantel 4 der freie Zwischenraum 7 gebildet wird, der einen ringförmigen Querschnitt hat und in den die Öffnung 5 mündet. Die Hohlfäden 1 sind hierbei im wesentlichen geradlinig und parallel zueinander angeordnet. Die Endbereiche 8 des Gehäusemantels 4 weisen einen kleineren Umfang auf als der sich unmittelbar daran anschließende mittlere Bereich des Gehäusemantels 4. Dies erleichtert das Miteinander-Verbinden mehrerer solcher Grundeinheiten beispielsweise mit Verbindungsringen (Zwischenstücken, Muffen o.a.), wie dies beispielshalber in den Figuren 8 bis 12 dargestellt ist. Der Verteilerkörper 6 kann so ausgebildet sein, wie dies in Figur 7 detaillierter dargestellt ist.

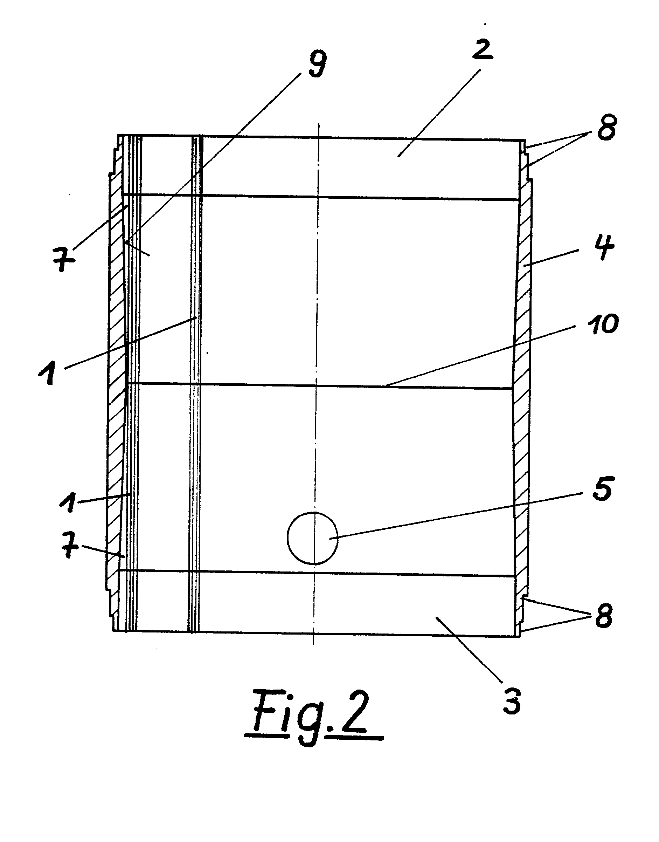

Figur 2 zeigt eine Ausführungsform mit einem Gehäusemantel 4, dessen innerer Umfang 9 sich zur Mitte 10 hin verringert, so daß der von dem Gehäusemantel umgebene Raum an dieser Stelle 10 den engsten Querschnitt aufweist. Ein so ausgebildeter Gehäusemantel 4 läßt sich vorteilhaft aus Kunststoff im Spritzgußverfahren herstellen.

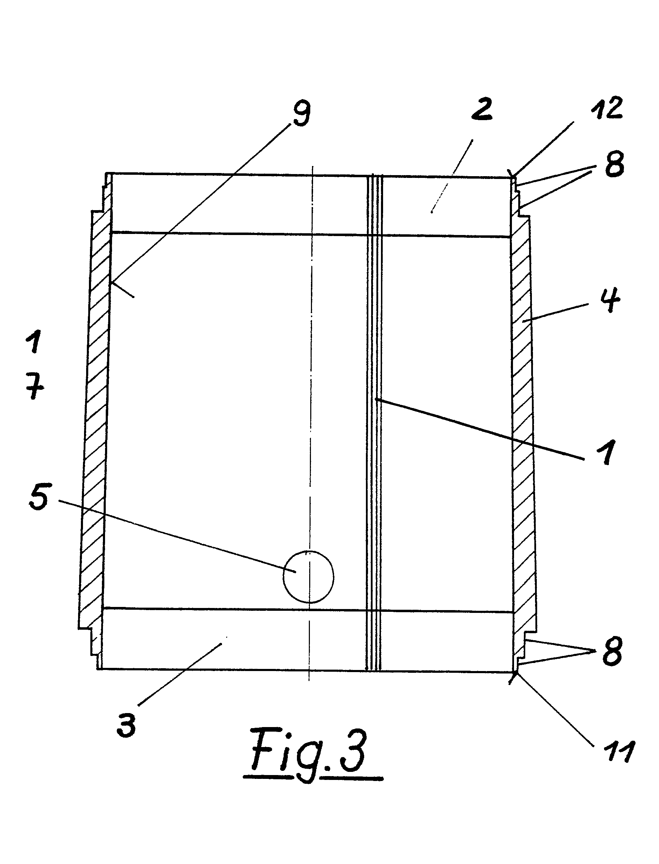

Figur 3 zeigt eine Ausführungsform mit einem Gehäusemantel 4, dessen innerer Umfang 9 sich von seinem Ende 11 zu seinem Ende 12 hin verringert, so daß der von dem Gehäusemantel 4 umgebene Raum am Gehäusemantelende 12 den geringsten Querschnitt aufweist. Auch ein Gehäusemantel 4 in dieser Ausführungsform läßt sich in vorteilhafter Weise im Spritzgrußverfahren herstellen.

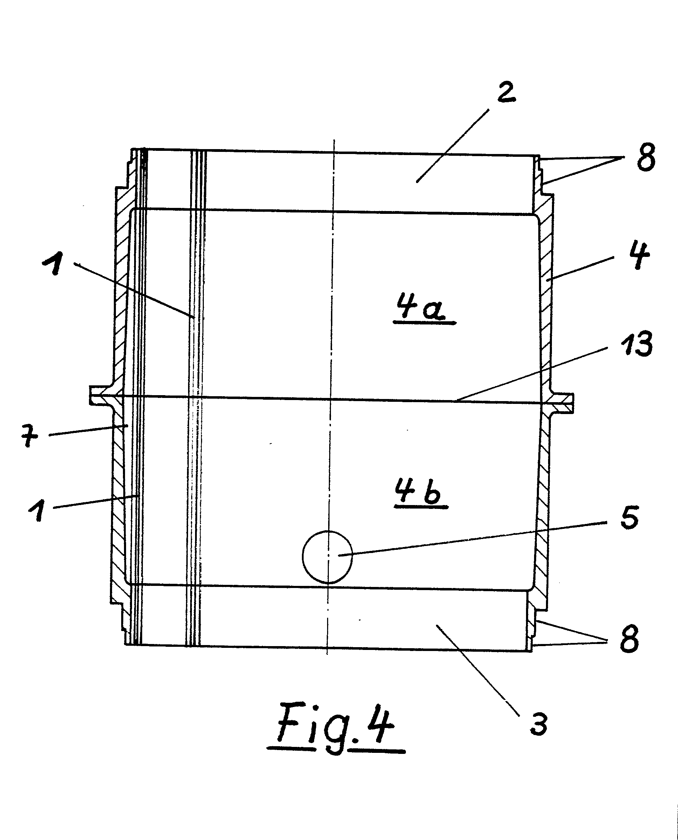

Figur 4 zeigt eine Ausführungsform mit einem Gehäusemantel 4, der aus zwei Teilen 4a und 4b mit gleichem Querschnitt zusammengesetzt ist und bei dem die Nahtstelle 13 sichtbar ist. Der innere Umfang des Gehäusemantels 4 dieser Ausführungsform vergrößert sich zur Nahtstelle 13 hin und erreicht dort sein größtes Ausmaß. Die beiden Teile 4a und 4b dieses Gehäusemantels 4, die nicht unbedingt gleich lang zu sein brauchen, können ebenfalls in vorteilhafter Weise im Spritzgrußverfahren hergestellt werden. Sie können durch Verschweißen oder Verkleben unlösbar miteinander verbunden werden. Jedoch ist auch eine lösbare Verbindung möglich.

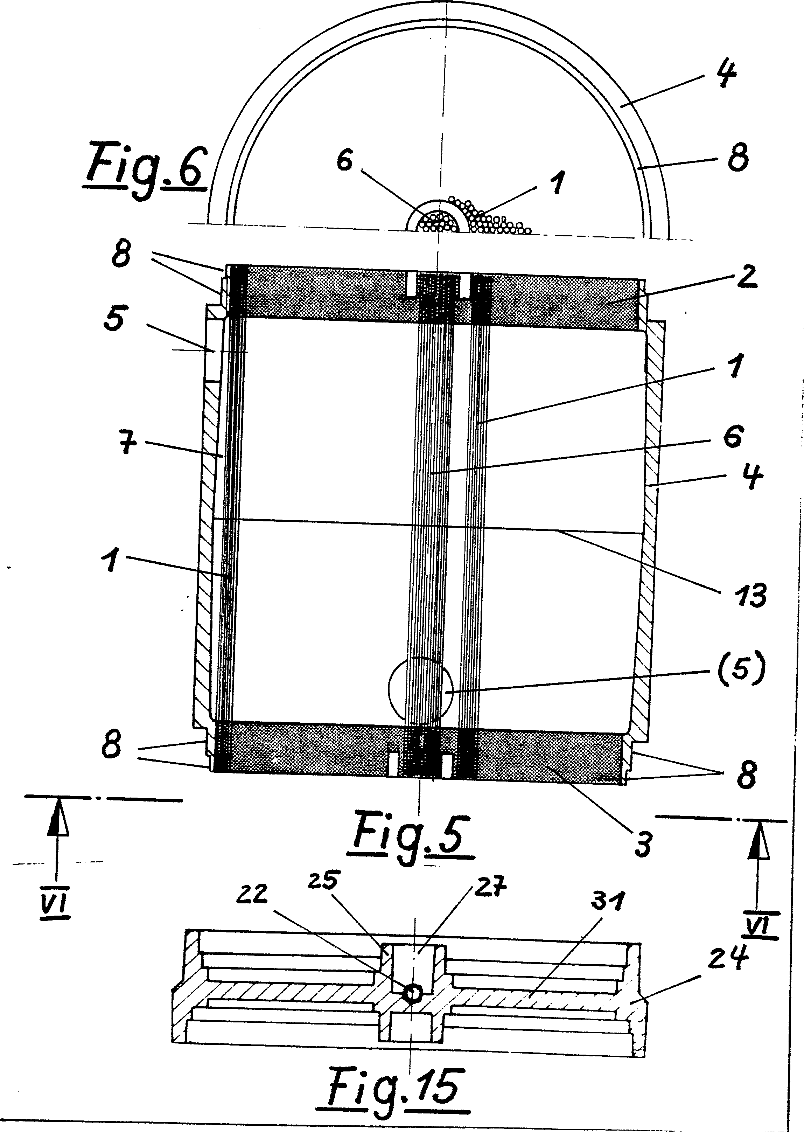

Figur 5 und 6 zeigen eine Grundeinheit, bei der der Verteilerkörper 6 aus mehreren geradlinig ausgebildeten und im wesentlichen parallel zueinander angeordneten mikroporösen, durchgehende nach außen offene Poren aufweisenden Hohlfäden gebildet wird. Der Gehäusemantel 4 entspricht dem in Figur 4 dargestellten. Die Öffnung kann bei 5 oder (5) münden.

Figur 7 zeigt eine vorteilhafte Ausgestaltungsform des Verteilerkörpers 6, wobei dieser rohrförmig ausgebildet ist und auf seiner Außenseite mehrere umlaufende Kanäle 14 aufweist, die mit dem Innenraum 15 über die Durchbrüche (Bohrungen) 16 verbunden sind. Die Kanäle 14 können mit einer mikroporösen, durchgehende nach außen offene Poren aufweisenden Membran abgedeckt sein (nicht dargestellt).

Figur 8 zeigt eine Grundeinheit, an deren einem Ende die den Verteiler-bzw. Sammelraum 29 für den die Hohlfäden 1 durchströmenden fluiden Stoff bildende diffusorähnlich ausgebildete Kappe 19 mit dem im Bereich ihrer Längsachse angeordneten in Längsrichtung mündenden Anschlußstutzen 20 angeordnet ist und an deren anderem Ende die den Verteiler-bzw. Sammelraum 28 für den die Hohlfäden 1 durchströmenden fluiden Stoff teilweise bildende Kappe 17 mit dem (der) tangential mündenden Anschlußstutzen (Öffnung) 18 angeordnet ist. Zwischen der Kappe 17 und dem Gehäusemantel 4 ist der äußere Zwischenring 24 mit dem inneneren Zwischenring 25 angeordnet, der den Anschlußstutzen 21, die Rohrleitung 22 und die Ab-bzw. Zuleitung 27 für den die Hohlfäden umströmenden fluiden Stoff aufweist. Die Öffnung 5 erübrigt sich beispielsweise dann, wenn die Vorrichtung als Cross-Flow-Mikrofilter verwendet wird.

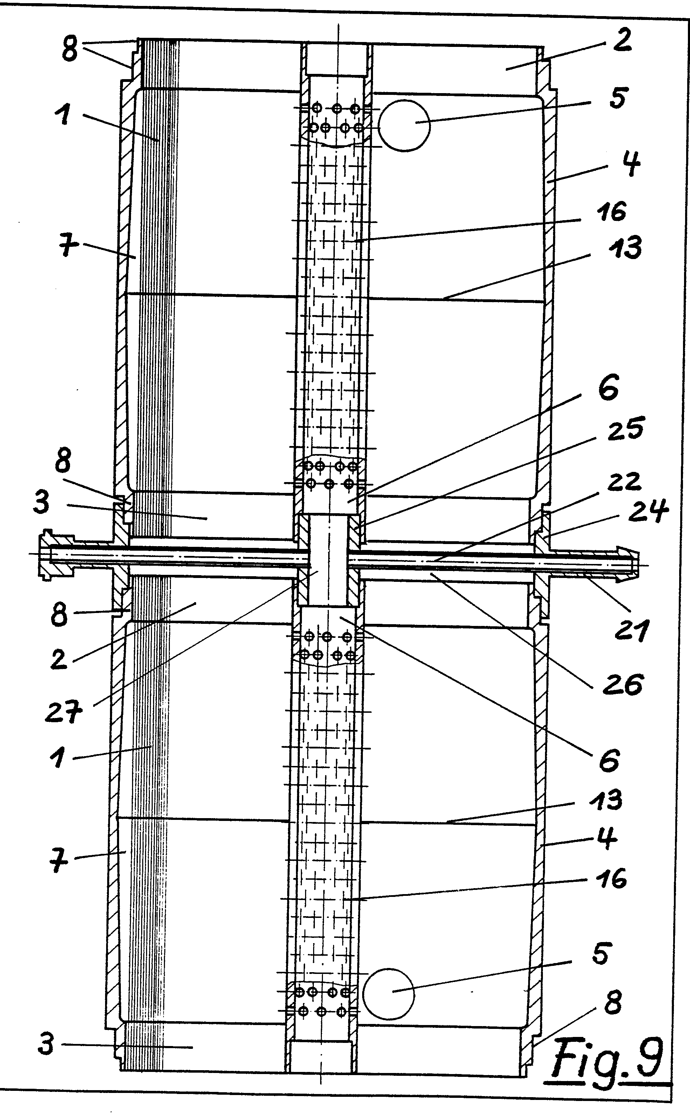

Figur 9 zeigt zwei Grundeinheiten, die den gleichen Querschnitt aufweisen und durch den äußeren Zwischenring 24 und den inneren Zwischenring 25 in einem stirnseitigen Abstand voneinander miteinander verbunden sind. Der innere Zwischenring 25 verbindet die beiden Verteilerkörper 6 der beiden Grundeinheiten. Durch den stirnseitigen Abstand der beiden Grundeinheiten wird der Verteiler-bzw. Sammelraum 26 gebildet. Die vom inneren Zwischenring 25 gebildete Ab-bzw. Zuleitung 27 ist über die Rohrleitung 22 mit dem Anschlußstutzen 21 verbunden.

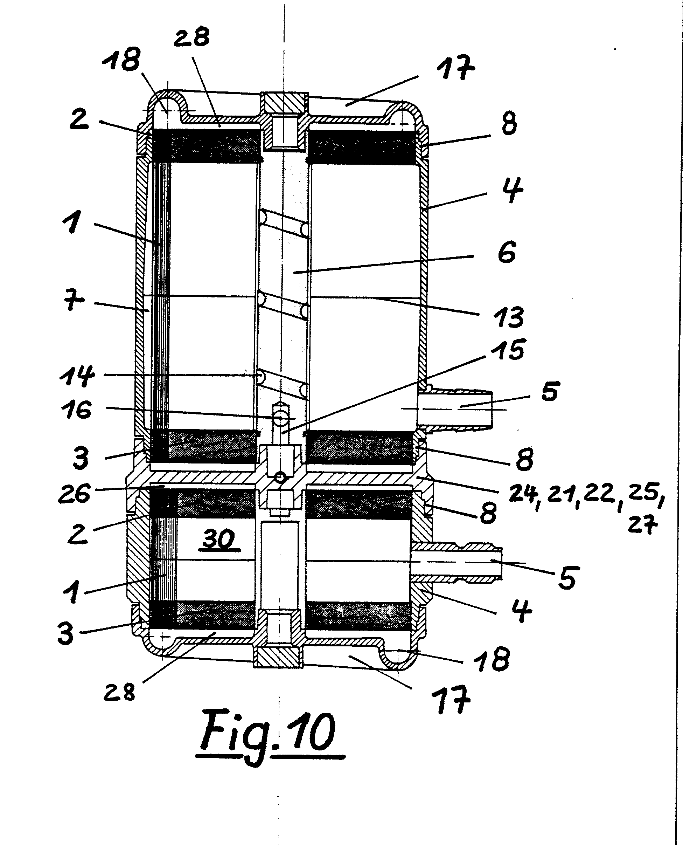

Figur 10 zeigt eine Grundeinheit, die über das Zwischenstück 21, 22, 24, 25, 27 mit einer anderen Einrichtung .30 verbunden ist. Diese andere Einrichtung 30 kann beispielsweise ein Wärmeaustauscher, ein Hämokonzentrator, ein Plasmaseparator oder ein arterielles Filter zum Abtrennen von Gasblasen sein. Es ist auch möglich, mehr als zwei gleiche oder unterschiedliche der genannten oder auch andere Einrichtungen auf diese Weise miteinander zu verbinden. Bei den in Figur 10 dargestellten Einrichtungen sind die beiden Kappen 17 wie die Kappe 17 in Figur 8 ausgebildet.

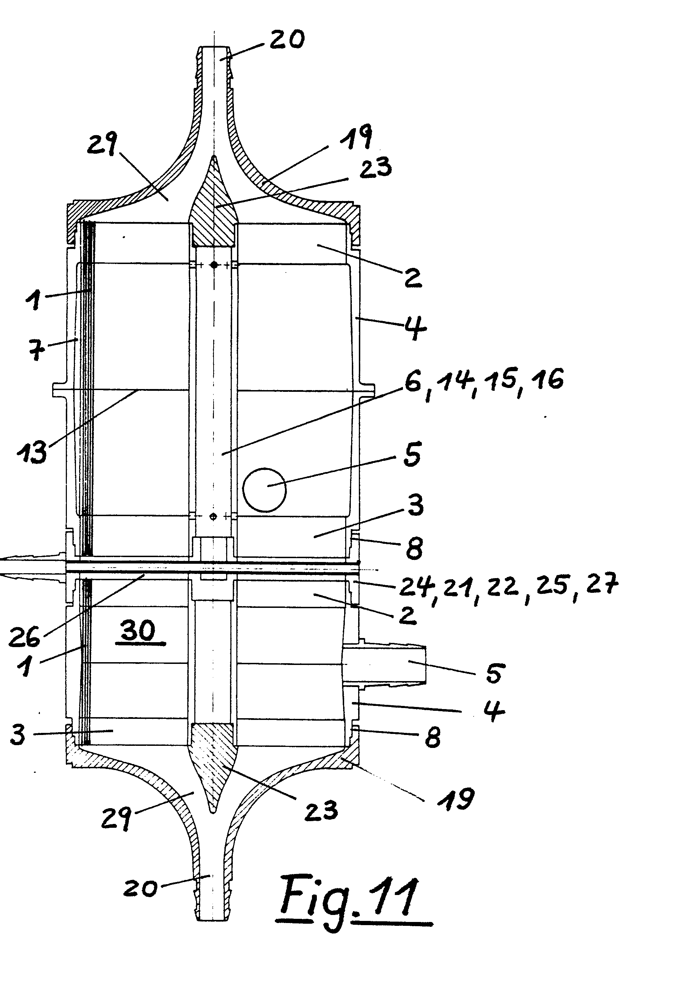

Für die in Figur 11 dargestellte Vorrichtung gilt dasgleiche wie für die in Figur 10 dargestellte und oben beschriebene Vorrichtung, wobei hier die beiden Kappen 19 wie die Kappe 19 in Figur 8 ausgebildet sind.

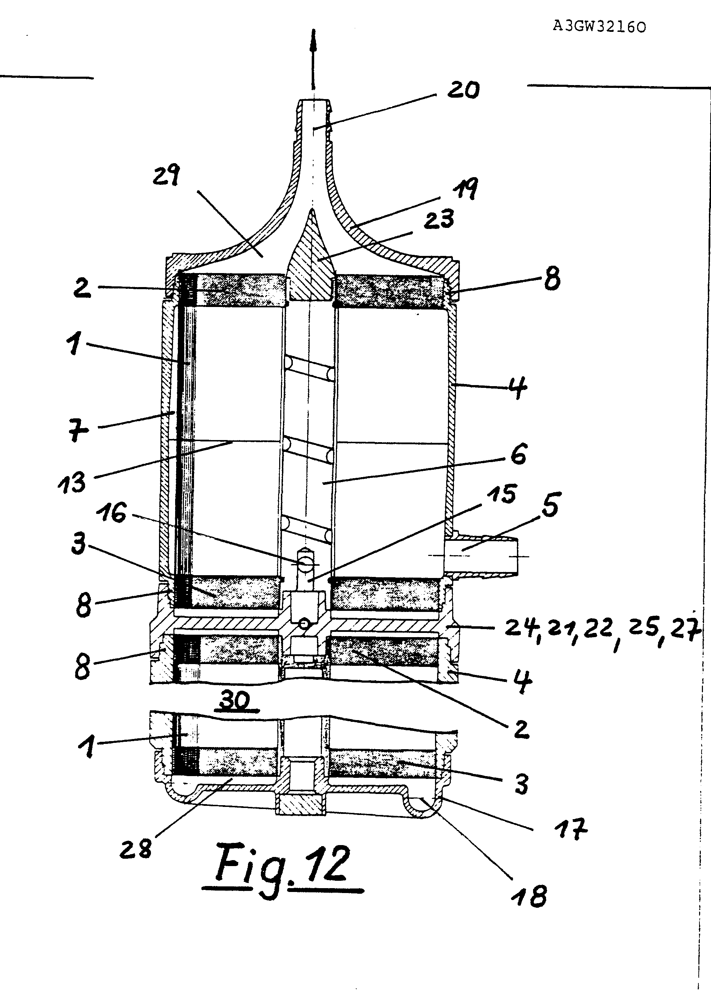

Bei der in Figur 12 dargestellten Vorrichtung, für die im übrigen das für die in den Figuren 10 und 11 dargestellten Einrichtungen Gesagte gilt, ist für das Zuführen des die Hohlfäden 1 durchströmenden Fluids die Kappe 17 mit dem tangential mündenden Anschlußstutzen 18 und für das Abführen des aus den Hohlfäden 1 ausgetretenen Fluids die diffusorähnlich ausgebildete Kappe 19 mit dem im Bereich ihrer Längsachse angeordneten, in Längsrichtung mündenden Anschlußstutzen 20 angeordnet. Diese Ausführungsform hat sich insbesondere dann als vorteilhaft erwiesen, wenn das die Hohlfäden 1 durchströmende Fluid Blut ist, die Einrichtung 30 beispielsweise ein Wärmeaustauscher und die erfindungsgemäße Grundeinheit beispielsweise ein Oxygenator ist.

Bei den in den Figuren 9 bis 12 dargestellten Ausführungsformen sind die Strömungsquerschnitte für das die Hohlfäden 1 durchströmende Fluid der in Reihe geschalteten Einrichtungen gleichgestaltig ausgebildet und gleich groß bemessen.

Die Einrichtung 30 in den Figuren 10 bis 12 kann ähnlich aufgebaut sein wie die erfindungsgemäße Grundeinheit und beispielsweise ebenfalls durchgehend offene, mikroporöse und durchgehende nach außen offene Poren aufweisende Hohlfäden 1, deren Endbereiche in je einen Vergußmasseblock 2 bzw. 3 eingegossen sind, die fluiddicht mit dem Gehäuse mantel 4 der Einrichtung 30 verbunden sind, sowie ggf. einen Verteilerkörper 6 und/oder eine Öffnung 5 für das Zu- oder Abführen eines Fluids aufweisen. Darüberhinaus kann die Einrichtung 30 weitere oder alle übrigen Merkmale der erfindungsgemäßen Grundeinheit aufweisen, wie sie oben beschrieben wurden oder sich für den Fachmann in naheliegender Weise von selbst ergeben, insbesondere eine diffusorähnlich ausgebildete Kappe 19, eine Kappe 17 mit tangential mündendem Anschlußstutzen 18 usw.

Bei Verwendung von diffusorähnlich ausgebildeten Kappen 19 wird das Fluid zweckmäßigerweise durch einen Umlenkkörper 23 umgelenkt (vgl. Figuren 8, 11 und 12). Dies gilt sowohl für die erfindungsgemäße Grundeinheit als auch für die Einrichtung 30.

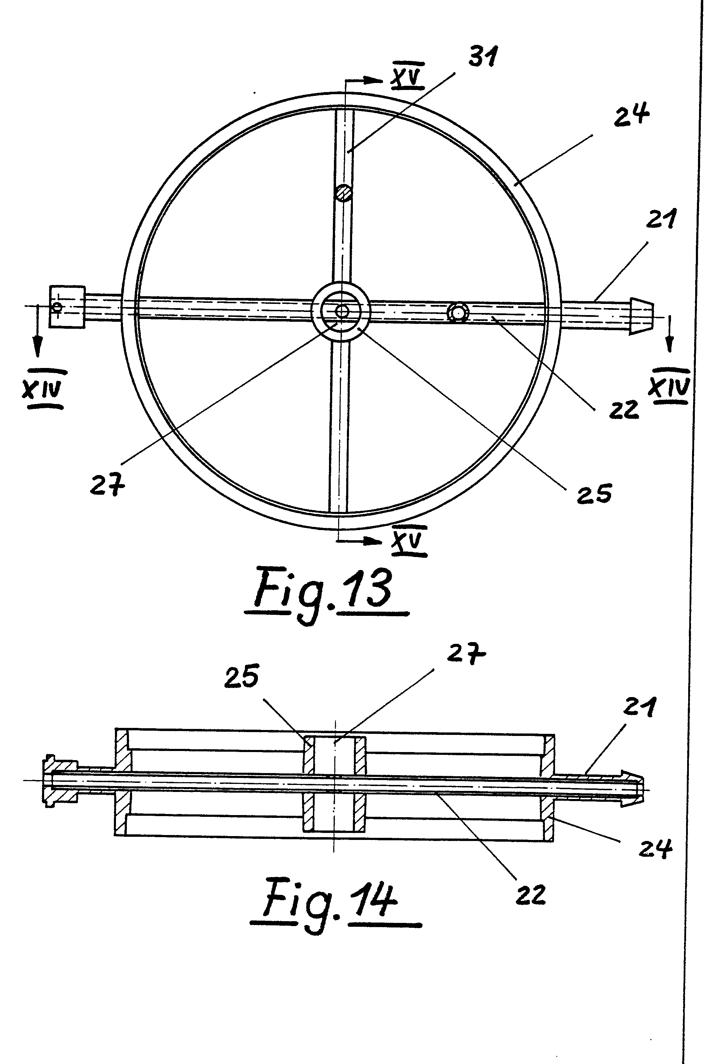

Die Figuren 13 bis 15 zeigen Ausgestaltungsformen des Zwischenstücks zum Verbinden erfindungsgemäßer Grundeinheiten miteinander oder mit anderen Einrichtungen 30. Dieses Verbindungsstück weist auf: den äußeren Zwischenring 23, den inneren Zwischenring 25, den Anschlußstutzen 21, die Rohrleitung 22, sowie die Ab- bzw. Zuleitung 27. Die genannten Teile können eine Einheit bildend fest miteinander verbunden sein und beispielsweise als ein Teil im Spritzgußverfahren hergestellt sein. Die Funktionsweise dieses Zwischenstücks für das Zu- oder Abführen des die Hohlfäden 1 der erfindungsgemäßen Grundeinheit und/oder der Einrichtung 30 umströmenden Fluids zu bzw. von dem Verteilerkörper 6 ergibt sich von selbst und bedarf daher keiner weiteren Erläuterung. Die Rohrleitung 22 des Zwischen stücks kann durch eine Halterung 31 gegen Bruch oder Verbiegen geschützt werden. Die Halterung 31 und die Rohrleitung 22 können einen strömungsgünstigen Querschnitt aufweisen.

Figur 15 stellt einen Schnitt durch das Zwischenstück gemäß Figur 13 entlang der Linie XV - XV und Figur 14 einen solchen entlang der Linie XIV - XIV dar.

**Ansprüche**

1. Vorrichtung zum Stoffaustausch zwischen zwei fluiden Stoffen durch die Wand von durchgehend offenen Hohlfäden, deren Endbereiche in je einem Vergußmasseblock eingegossen sind, bei welcher die beiden Vergußmasseblöcke fluiddicht mit einem die Hohlfäden umgebenden Gehäusemantel verbunden sind, der Gehäusemantel wenigstens eine Öffnung für das Zu-oder Abführen eines der beiden fluiden Stoffe aufweist und im Bereich ihrer Längsachse ein über die gesamte Länge der Hohlfäden sich erstreckender Verteilerkörper für das über die gesamte freie Länge derselben gleichmäßige Zu-oder Abführen des anderen der beiden fluiden Stoffe angeordnet ist, dadurch gekennzeichnet, daß die Hohlfäden mikroporös sind und durchgehende nach außen offene Poren aufweisen, daß die Hohlfäden über den gesamten Querschnitt der Vergußmasseblöcke bis in den zum Gehäusemantel hin sich erstreckenden Randbereich gleichmäßig verteilt angeordnet sind und daß zwischen dem nicht eingegossenen Bereich der äußeren Hohlfäden und dem Gehäusemantel wenigstens ein freier Raum mit ringförmigem Querschnitt vorhanden ist, in den die wenigstens eine Öffnung mündet.

2. Vorrichtung nach Anspruch 1, dadurch gekennzeichnet, daß die Hohlfäden hydrophob sind.

3. Vorrichtung nach Anspruch 1 oder 2, dadurch gekennzeichnet, daß die Hohlfäden aus einem vollsynthetischen Polymeren bestehen.

4. Vorrichtung nach einem der Ansprüche 1 bis 3, dadurch gekennzeichnet, daß die Hohlfäden aus Polypropylen bestehen.

5. Vorrichtung nach einem der Ansprüche 1 bis 3, dadurch gekennzeichnet, daß die Hohlfäden aus Polyäthylen bestehen.

6. Vorrichtung nach einem der Ansprüche 1 bis 5, dadurch gekennzeichnet, daß die Hohlfäden im wesentlichen geradlinig und parallel zueinander angeordnet sind.

7. Vorrichtung nach einem der Ansprüche 1 bis 5, dadurch gekennzeichnet, daß die Hohlfäden ähnlich wie in einer Kreuzspule angeordnet sind.

8. Vorrichtung nach einem der Ansprüche 1 bis 7, dadurch gekennzeichnet, daß die Endbereiche des Gehäusemantels einen kleineren Umfang aufweisen als die sich unmittelbar daran anschließenden Bereiche.

9. Vorrichtung nach einem der Ansprüche 1 bis 8, dadurch gekennzeichnet, daß sich wenigstens der innere Umfang des Gehäusemantels zur Mitte hin verringert.

10. Vorrichtung nach einem der Ansprüche 1 bis 8, dadurch gekennzeichnet, daß sich wenigstens der innere Umfang des Gehäusemantels von einem Ende zum anderen Ende hin verringert.

11. Vorrichtung nach einem der Ansprüche 1 bis 8, dadurch gekennzeichnet, daß der Gehäusemantel zylinderförmig ausgebildet und aus zwei Teilen mit gleichem Querschnitt zusammengesetzt ist und daß die Nahtstelle sichtbar ist.

12. Vorrichtung nach einem der Ansprüche 1 bis 11, dadurch gekennzeichnet, daß der Gehäusemantel als Spritzgußteil ausgebildet ist.

13. Vorrichtung nach einem der Ansprüche 1 bis 12, dadurch gekennzeichnet, daß der nicht eingegossene Bereich des Verteilerkörpers aus wenigstens einem mikroporösen durchgehende nach außen offene Poren aufweisenden Rohr oder Hohlfaden gebildet wird.

14. Vorrichtung nach Anspruch 13, dadurch gekennzeichnet, daß der Verteilerkörper aus einem vollsynthetischen Polymeren, insbesondere Polypropylen, besteht.

15. Vorrichtung nach einem der Ansprüche 1 bis 12, dadurch gekennzeichnet, daß der Verteilerkörper rohrförmig ausgebildet ist und auf seiner Außenseite mindestens einen umlaufenden Kanal aufweist, der mit dem Innenraum des Verteilerkörpers an mindestens einer Stelle über einen Durchbruch verbunden ist und der gegebenenfalls mit einer mikroporösen durchgehende nach außen offene Poren aufweisenden Membran abgedeckt ist.

16. Vorrichtung nach einem der Ansprüche 1 bis 15, gekennzeichnet durch eine an wenigstens einem Ende aufgesetzte einen Verteiler-bzw. Sammelraum für den die Hohlfäden durchströmenden fluiden Stoff bildende Kappe mit einem tangential mündenden Anschlußstutzen und einem im Bereich ihrer Längsachse angeordneten an den Verteilerkörper angeschlossenen Anschlußstutzen für den anderen, die Hohlfäden umströmenden, fluiden Stoff.

17. Vorrichtung nach einem der Ansprüche 1 bis 16, gekennzeichnet durch eine an wenigstens einem Ende aufgesetzte einen Verteiler-bzw. Sammelraum für den die Hohlfäden durchströmenden fluiden Stoff bildende diffusorähnlich ausgebildete Kappe mit einem im Bereich ihrer Längsachse angeordneten in Längsrichtung mündenden Anschlußstutzen und einen zwischen der Kappe und dem Gehäusemantel angeordneten einen Anschlußstutzen und wenigstens eine Zuleitung zum Verteilerkörper für den die Hohlfäden umströmenden fluiden Stoff aufweisenden Zwischenring.

18. Vorrichtung zum Stoffaustausch zwischen zwei fluiden Stoffen, gekennzeichnet durch wenigstens zwei Vorrichtungen nach einem der Ansprüche 1 bis 17, die den gleichen Querschnitt aufweisen, auf einer Achse, also stirnseitig, in einem Abstand voneinander angeordnet sind und durch je einen den Gehäusemantel zweier benachbarter Einheiten miteinander verbindenden äußeren Zwischenring und je einen die Verteilerkörper zweier benachbarter Einheiten miteinander verbindenden inneren Zwischenring, die einen Verteiler-bzw. Sammelraum zwischen je zwei Einheiten bilden, miteinander verbunden sind.

19. Vorrichtung nach Anspruch 18, dadurch gekennzeichnet, daß wenigstens ein äußerer Zwischenring einen Anschlußstutzen und wenigstens eine von dem Anschlußstutzen zu dem dazugehörenden inneren Zwischenring führende Rohrleitung aufweist.

20. Vorrichtung nach einem der Ansprüche 17 bis 19, dadurch gekennzeichnet, daß die Zwischenringe als Spritzgußteile ausgebildet sind.

21. Verwendung der Vorrichtung nach einem der Ansprüche 1 bis 20 als Begasungs-und/oder Entgasungseinrichtung - insbesondere als Blutoxygenator-, Transmembrandestillationseinrichtung, Filter, Ölabscheider oder Blutplasmaseparator.

22. Vorrichtung nach einem der Ansprüche 1 bis 20, dadurch gekennzeichnet, daß sie in Reihe mit einem Wärmeaustauscher und/oder Hämokonzentrator und/oder arteriellen Filter zur Abtrennung von Gasblasen und/oder einem Plasmaseparator geschaltet ist.

23. Vorrichtung nach Anspruch 22, dadurch gekennzeichnet, daß die Blutströmungsquerschnitte aller in Reihe geschalteten Einrichtungen gleich groß bemessen sind.

24. Vorrichtung nach einem der Ansprüche 1 bis 19, 22 oder 23, dadurch gekennzeichnet, daß sie zur Behandlung von Blut vorgesehen ist und daß für das Zuführen des Blutes am einen Ende eine den Verteilerraum für das die Hohlfäden durchströmende Blut bildende Kappe mit einem tangential mündenden Anschlußstutzen und für das Abführen des Blutes am anderen Ende eine den Sammelraum für das aus den Hohlfäden austretende Blut bildende diffusorähnlich ausgebildete Kappe mit einem im Bereich ihrer Längsachse angeordneten in Längsrichtung mündenden Anschlußstutzen angeordnet ist.

A3GW32160

## Fig.1

A3GW32160

_Fig.2_

A3GW3216O

## _Fig.3_

A3GW32160

## Fig.4

**Fig.6**

**Fig.5**

**Fig.15**

0 264 696

A3GW32160

A3GW32160

Fig.7

A3GW32160

## Fig.8

Fig.9

A3GW32160

Fig.10

A3GW32160

Fig.11

A3GW32160

*Fig.12*

A3GW32160

_Fig.13_

_Fig.14_